# EUROPÄISCHE PATENTANMELDUNG

(11) **EP 2 561 948 A1**
(43) Veröffentlichungstag der Anmeldung: **27.02.2013**
(21) Anmeldenummer: 11006908.5
(22) Anmeldetag: 24.08.2011
(51) Int. Cl.: B23K 20/12, B23K 37/053, B23K 37/06

(54) **Verfahren und Anlage zum Herstellen eines Flansch-Rohr-Flansch-Elementes mittels Rührreibschweissen**

(71) Anmelder: Wartmann Technologie AG, 4538 Oberbipp (CH)
(72) Erfinder: Schenk, Tobias, 5014 Gretzenbach (CH)
(74) Vertreter: Hannig, Wolf-Dieter

(57) **Zusammenfassung**

Die Erfindung betrifft ein Verfahren und eine Anlage zum Herstellen eines Flansch-Rohr-Flansch-Elementes (2,3) mittels Rührreibschweißen.

Das Verfahren enthält folgende Schritte:
A) Zentrieren der Längsachse (LA) des Rohres (2) nach der inneren Geometrie von Flansch (3) und Rohr (2) auf die Drehachsen der Flanschaufnahmen (8,22) durch eine in das Stoßende des Flansches spannend eingreifende, in das Stoßende des Rohres spannend übergreifende, zugleich die Schweißbadsicherung übernehmende Spann- und Abstützscheibe (15),
B) Abtasten der Stoßfuge am Außenumfang von Flansch (3) und Rohr (2) während ihrer Rotation um die Drehachse durch je einen Sensor (35) in Rotationsrichtung, Ermitteln der momentanen Lage des Stoßes durch Verarbeitung der Sensordaten mit einer Auswerteelektronik und Weiterleiten dieser Daten an die Steuerung zur Regelung der Position der Rührreibschweißsonde in x-, y- und z-Richtung, und
C) Anfahren und Andrücken eines an den Durchmesser von Rohr (2) und Flansch (3) angepassten Formkeils an das rotierende Flansch-Rohr-Flansch-Element in Flucht der durch die oberhalb der Drehachse (A1,A2) liegenden Stoßfugen horizontal verlaufenden Tangentialebene, sobald das Flansch-Rohr-Flansch-Element eine Rotation um 350° bis 358°, vorzugsweise 355°, ausgeführt hat, sodann der Formkeil in schleifend angedrückter Lage an dem rotierenden Flansch-Rohr-Flansch-Element verbleibt und bei Erreichen einer Winkellage von 362° bis 370°, vorzugsweise 365°, die Rotation des Flansch-Rohr-Flansch-Elements gestoppt, gleichzeitig die Rührreibschweißsonde des Rührreibschweißwerkzeugs (30) in den Formkeil in Richtung Tangentialebene (TE) gefahren, das von der Rührreibschweißsonde hinterlassende Loch durch Material des Formkeils verfüllt wird und
D) Abfahren des Formkeils vom Flansch-Rohr-Flansch-Element und Entnehmen des fertigen Flansch-Rohr-Flansch-Elementes nach Lösen der Spann- und Abstützscheiben und axialem Entspannen der Einspanneinheiten (5,6) und Zurückfahren der verfahrbaren Einspanneinheit (6).

## Beschreibung

Die Erfindung betrifft ein Verfahren zum Herstellen eines Flansch-Rohr-Flansch-Elementes mittels Rührreibschweißen, bei dem die Flansche an je einer von durch einen Direktantrieb angetriebene, um die Längsachse des Flansches drehbare Flanschaufnahmen gegeneinander ausgerichteter Einspanneinheiten fixiert werden, die entlang der Drehachsen der Flanschaufnahmen eine gemeinsame Längsachse aufspannen, wobei eine Einspanneinheit ortsfest ist und die andere gegen letztere in Flucht der Drehachsen zum axialen Einspannen eines Rohres zwischen den Flanschen unter Bildung eines Stumpfstoßes so verfahren wird, dass das eingespannte Rohr zusammen mit den Flanschen um die Drehachse durch die Flanschaufnahmen in Rotation versetzt werden kann und zugleich mit dieser Rotationsbewegung senkrecht in die oberhalb der Drehachse liegenden Stoßfuge eine auf das Material von Rohr und Flansch abgestimmt rotierende Rührreibschweißsonde eines Rührreibschweißwerkzeugs mit Anpresskraft abgesenkt, die Reaktionskraft für die Anpresskraft von einer unter der Stoßfuge im Inneren von Flansch und Rohr zugeordneten Schweißbadsicherung aufgebracht wird, während die Rührreibschweißsonde in die Stoßfuge eindringt, deren Materialbereiche erweicht, rührt und innerhalb eines Umlaufes miteinander verbindet, wobei die Rotationsgeschwindigkeit des Flansch-Rohr-Flansch-Elementes, die Drehgeschwindigkeit und die Anpresskraft der Rührreibschweißsonde von einer Steuerung zentral eingestellt werden.

Die Erfindung betrifft weiterhin eine Anlage zum Herstellen eines Flansch-Rohr-Flansch-Elementes mittels Rühr.r.eibschweißen, mit Einspanneinheiten, an denen je ein an einer Flanschaufnahme fixierter Flansch durch einen Direktantrieb drehbar um seine mit der Drehachse der Flanschaufnahme zusammenfallende Längsachse angeordnet ist, wobei die Einspanneinheiten zueinander in Flucht auf die Längsachsen ausgerichtet sind und eine gemeinsame Drehachse aufspannen, wobei die Einspanneinheit ortsfest und die andere gegen letztere zum axialen Einspannen des Rohres zwischen den Flanschen unter Bildung von Stumpfstößen an beiden Rohrenden durch einen Antrieb auf einem Laufschienenpaar verfahrbar ausgebildet ist, so dass das eingespannte Rohr und die Flansche eine Rotation um die Drehachsen ausführen, einem jeder Einspanneinheit zugeordneten Rührreibschweißwerkzeug, das in Bezug auf den jeweiligen Stumpfstoß horizontal und vertikal durch einen Kreuzschlitten zustellbar ist, einer im Inneren von Flansch und Rohr unterhalb der Stoßfuge angeordneten Schweißbadsicherung und einer Steuerung, die mit den Direktantrieben der Flanschaufnahmen und den Antrieben für das Rührreibschweißwerkzeug zum Einstellen der Rotationsgeschwindigkeit von Rohr und Flansch sowie der Zustellung des Rührreibschweißwerkzeugs und dessen Drehgeschwindigkeit in Verbindung steht.

### Stand der Technik

Aus der EP 1 046 453 B1 ist eine Reibschweißverbindungs-Vorrichtung zum Verbinden einer Mehrzahl von aneinander anliegenden Elementen aus Aluminium oder Aluminiumlegierungen bekannt. Die Vorrichtung weist Abstützrollen zum Abstützen der aneinander anliegenden Elemente, einen Antriebsmotor zum Rotieren der aneinander anliegenden Elemente um ihre Achse und eine Verbindungsvorrichtung mit einem drehbaren Senkstift auf, der benachbart zu dem aneinander anliegenden Bereich der Elemente angeordnet ist, wobei der Senkstift den aneinander liegenden Bereich der Elemente aufweicht und rührt, um die aneinander liegenden Elemente innerhalb eines Umlaufs miteinander zu verschweißen. Die Vorrichtung hat drehbare Einspannbereiche zum Einspannen und zum axialen Drücken der gegenüberliegenden Elemente, wobei der eine Einspannbereich ortsfest, der andere jedoch gegen letzteren verschiebbar ist. Die Einspannbereiche sind so ausgebildet, dass sie die Enden eines Auto-Aufhängarmes von außen formschlüssig umfassen können. Hierzu besitzt der eine Einspannarm einen konvex ausgebildeten inneren Bereich, in dem das u-förmige Ende der Gabel eingepasst und der andere Einspannarm dagegen einen konkaven inneren Bereich auf, in dem das andere Ende der Gabel eingepasst ist.
Dieser bekannte Stand der Technik gewährleistet zwar ein sicheres Einpassen der Bauteilenden in den Einpannarmen, jedoch keine genaue Zentrierung der Längsachse der aneinander anliegenden Bauteile nach den Drehachsen der Einspannarme, was für rotationssymmetrische Bauteile wie Rohre und Flansche unbedingte Voraussetzung ist, um eventuelle Rohrovalitäten und Verformungen an langen Bauteilen auszugleichen. Des Weiteren ist diese bekannte Vorrichtung durch die Vielzahl von Stützeinrichtungen aufwändig und auch wartungsintensiv. Die Stützeinrichtungen sind außerdem nicht in der Lage, die Funktion der Schweißbadsicherung im Stoßbereich des erwärmten und erweichten Materials sicherzustellen.

Die DE 27 02 396 A1 beschreibt eine Vorrichtung zur Zentrierung und Drehung eines in einer Schweißmaschine mit einem Flansch zu verschweißenden Rohres. Diese Vorrichtung besteht aus zwei horizontal einander gegenüberliegend vorgesehenen und einem vertikalen Steuerschlitten, welche derart verstellbar angeordnet sind, dass das Rohr in Schweißstellung stets zur Drehachse des Flansches zentriert ist.
Diese bekannte Zentriervorrichtung hat einen komplizierten Aufbau und erfordert ein zeitaufwändiges Einrichten, so dass eine Serienfertigung mit hohen Kosten verbunden ist.

### Aufgabenstellung

Bei diesem Stand der Technik liegt der Erfindung die Aufgabe zugrunde, das Zentrieren von Flansch und Rohr zu vereinfachen und die Schweißbadsicherung neben dem Abstützen des durch das Rührreibschweißen erweichten Bereiches auch zur Aufnahme der Anpresskräfte beim Rührreibschweißen und zum Zentrieren des Rohres nach der Längsachse der Flansche unter Wegfall von Mess- und Einrichtvorgängen bei gleichzeitiger Reduzierung der Fertigungszeiten, unter Einsparung von Material und Gewährleistung wirtschaftlicher Vorteile zu nutzen.

Diese Aufgabe wird durch ein Verfahren der eingangs genannten Art mit den Merkmalen des Anspruches 1 und durch eine Vorrichtung mit den Merkmalen des Anspruches 11 gelöst.

Vorteilhafte Ausgestaltungen des Verfahrens und der Vorrichtung sind den Unteransprüchen entnehmbar.

Mit folgenden Schritten wird das erfindungsgemäße Verfahren ausgeführt:
A) Zentrieren der Längsachse des Rohres nach den inneren Geometrien von Flansch und Rohr auf die Drehachsen der Flanschaufnahmen durch eine in das Stoßende des Flansches spannend eingreifende, in das Stoßende des Rohres spannend übergreifende, zugleich die Schweißbadsicherung übernehmende Spann- und Abstützscheibe,
B) Abtasten der Stoßfuge am Außenumfang von Flansch und Rohr während ihrer Rotation um die Drehachse durch je einen Sensor in Rotationsrichtung, Ermitteln der momentanen Lage des Stoßes durch Verarbeitung der Sensordaten durch eine Auswerteelektronik und Weiterleiten dieser Daten an die Steuerung zur Regelung der Position der Rührreibschweißsonde in x-, y- und z-Richtung;
C) Anfahren und Andrücken eines an den Durchmesser von Rohr und Flansch angepassten Formkeils an das rotierende Flansch-Rohr-Flansch-Element in Flucht der durch die oberhalb der Drehachse liegenden Stoßfugen horizontal verlaufenden Tangentialebene, sobald das Flansch-Rohr-Flansch-Element eine Rotation um 350° bis 358°, vorzugsweise 355°, ausgeführt hat, sodann der Formkeil in schleifend angedrückter Lage an dem rotierenden Flansch-Rohr-Flansch-Element verbleibt und bei Erreichen einer Winkellage von 362° bis 370°, vorzugsweise 365°, die Rotation des Flansch-Rohr-Flansch-Elements gestoppt, gleichzeitig die Rührreibschweißsonde des Rührreibschweißwerkzeugs in den Formkeil in Richtung Tangentialebene gefahren, das von der Rührreibschweißsonde hinterlassende Loch durch Material des Formkeils verfüllt wird;
D) axiales Entspannen der Einspanneinheiten, Lösen der Spann- und Abstützscheiben und Entnehmen des fertigen Flansch-Rohr-Flansch-Elementes.

In einer bevorzugten Ausgestaltung des erfindungsgemäßen Verfahrens werden die Flansche und das Rohr zueinander in einem zweistufigen Zentriervorgang in ihre Stoßlage gebracht, indem zunächst die Flansche so an den Flanschaufnahmen befestigt werden, dass ihre Längsachsen mit der Drehachse der jeweiligen Einspanneinheit zusammenfallen, und anschließend die Längsachse des Rohrs auf die mit den Längsachsen der Flansche zusammenfallenden Drehachsen der Einspanneinheiten zentriert wird.
Dies hat den außerordentlichen Vorteil, dass Flansch-Rohr-Flansch-Elemente mit unterschiedlichen Durchmessern ohne ein aufwändiges und zeitintensives Einrichten der Flansche und des Rohres hergestellt werden können. Hierzu haben die Flanschaufnahmen Bohrungen auf Lochkreisen mit an die verschiedenen Flanschgrößen angepasstem Durchmesser. Die entsprechenden Flansche werden an den Flanschaufnahmen durch Verschraubung befestigt, die Spann- und Abstützscheibe in das Innere der Stirnbereiche des Flansches und des Rohres eingebracht und der Zentriervorgang wie zuvor beschrieben durchgeführt.

Vorteilhaft ist, wenn als Direktantriebe Synchronmotore eingesetzt werden, welche die Einspanneinheiten synchron mit gleicher Drehzahl antreiben, so dass die Stoßfugen von Rohr und Flansch an beiden Rohrenden durch die Rührreibschweißsonden simultan bearbeitet werden können. Das gleichzeitige Verbinden der Flansche an den beiden Rohrenden verkürzt die Fertigungszeit erheblich.

Für das axiale Einspannen des Rohres zwischen den Flanschen hat es sich als zweckmäßig erwiesen, die axiale Anpresskraft pneumatisch durch Druckzylinder zu erzeugen, wobei die Anpresskraft durch in Abhängigkeit der Dimensionierung von Rohr und Flansche auf Werte zwischen 5000 bis 8000 N über Proportionalventile eingestellt wird.

In weiterer bevorzugter Ausgestaltung des erfindungsgemäßen Verfahrens beaufschlagt die Spann- und Abstützscheibe beim Spannen in einem ersten Spannzustand etwa 65 bis 70% der Innenumfangs von Flansch und Rohr im Stoßbereich mittels voneinander durch Lücken beabstandeter Primärbacken und in einem zweiten Spannzustand der gesamten Umfang durch ein radiales Ausfahren von Sekundärbacken in die Lücken zwischen den Primärbacken in Richtung Innenwand von Flansch und Rohr, so dass die Stirnseite der Spann- und Abstützscheibe eine geschlossene Fläche für die Schweißbadsicherung, das Widerlager für die Anpresskräfte beim Rührreibschweißen und zum Spannen gegen die Innenwand bildet. Zum Lösen der Spann- und Abstützscheibe werden zunächst die Sekundärbacken aus dem Bereich zwischen den Primärbacken und anschließend die Primärbacken radial entgegengesetzt zur Innenwand von Rohr und Flansch eingefahren.

Eine weitere bevorzugte Ausführungsform des erfindungsgemäßen Verfahrens sieht vor, dass die Winkellage der Rotation des Flansch-Rohr-Flansch-Elementes durch einen Winkellagegeber der Direktantriebe ermittelt und diese an die Steuerung zum Auslösen des An- und Abfahrens des Formkeils weitergeleitet wird.

In einer weiteren bevorzugten Ausgestaltung des erfindungsgemäßen Verfahrens wird ein Sensor mit einer eigenen Datenvorverarbeitung, vorzugsweise ein Laser-Scanner, Bild-Sensor oder Linien-Laser, verwendet. Dies hat den Vorteil, dass die momentane Lage der Stoßfuge zwischen Flansch und Rohr in nahezu Echtzeit ermittelt und die Rührreibschweißsonde nach der ermittelten Lage der Stoßfuge eingestellt werden kann.
Es hat sich als zweckmäßig erwiesen, dass jeder Rührreibschweißsonde ein Sensor zugeordnet wird, so dass die simultane Einstellung der Rührreibschweißsonden an jeder Stoßfuge sichergestellt ist.

Das erfindungsgemäße Verfahren ist besonders zur Herstellung von Flansch-Rohr-Flansch-Elementen aus Leicht-oder Leichtmetalllegierungen wie Aluminium, Aluminium-Magnesium-, Aluminium-Magnesium-Siliziumlegierungen geeignet, kann aber auch für andere rotationssymmetrische Bauteile, beispielsweise aus Kupfer, Kupferlegierungen oder andere Eisen- oder Nichteisenlegierungen eingesetzt werden.

Die Aufgabe wird weiter durch eine Anlage dadurch gelöst, die Schweißbadsicherung als eine pneumatisch spann-und lösbare Spann- und Abstützscheibe zum Zentrieren des Rohres auf die Drehachse der Flansche und zum Aufnehmen der Anpresskräfte beim Rührreibschweißen ausgebildet ist, und dass ein Sensor zum Abtasten der Stoßfugen zwischen Rohr und Flansch vorgesehen ist, und dass weiter eine Vorrichtung zum An- und Abfahren eines Formkeiles in Flucht der horizontal oberhalb der Drehachse liegenden, durch die Stoßfuge verlaufenden Tangentialebene vorgesehen ist, um die Rührreibschweißsonde des Rührreibschweißwerkzeugs lochfrei aus der rührreibschweißverbundenen Stoßfuge herauszubewegen, wobei der Sensor und die Vorrichtung zum An- und Abfahren des Formkeils mit der Steuerung verbunden ist.

Von besonderer Bedeutung für die Dreifachfunktion der Spann- und Abstützscheibe ist es, dass diese einerseits eine ausreichende Dickenabmessung besitzt und in den Innenbereich von Flansch und Rohr soweit hineinreicht, dass der beim Rührreibschweißen auftretende Erweichungsvorgang entlang der Stoßfuge von Flansch und Rohr stabilisiert wird und zugleich die axialen Spannkräfte in Richtung Längsachse der Flansch-Rohr-Flansch-Anordnung übertragen werden können, ohne die erweichte Stoßfuge axial zu verformen, und andererseits ein einfaches Spannen beim Zentrieren und Lösen, ohne ein Nachbearbeiten des Flansch-Rohr-Elementes, ermöglicht wird.
Die Spann- und Abstützscheibe umfasst dazu
a) einen Primärbackenkörper aus mindestens drei Primarbacken, die unter Bildung von Lücken kreissegmentförmig am Umfang der Scheibe angeordnet sind und von je einem Steg- und Haltelement radial gehalten sind, an dem ein Steuerbolzen senkrecht aufragend befestigt ist;
b) eine Primärsteuerscheibe, in der für jede Primärbacke eine Steuerkulisse zum Führen der Steuerbolzen der Primärbacken vorgesehen ist;
c) einen Sekundärbackenkörper aus mindestens drei Sekundärbacken, die von je einem radial angeordneten Steg- und Haltelement gehalten sind, an dem ein Steuerbolzen senkrecht aufragend befestigt ist, wobei die Sekundärbacken zueinander versetzt entlang des Umfangs so angeordnet sind, dass sie die Lücken zwischen zwei Primärbacken schließen können;
d) eine Sekundärsteuerscheibe, in der für jede Sekundärbacke eine Steuerkulisse zum Führen der Steuerbolzen der Sekundärbacken vorgesehen ist;
e) einem Trägerelement mit radial angeordneten Aussparungen zum Verschieben der Steg- und Halteelemente der Primär- und Sekundärbacken in radialer Richtung;
f) eine Steuerwelle, die fest mit der Primärsteuerscheibe und der Sekundärsteuerscheibe verbunden ist und
g) einen pneumatischen, hydraulischen oder elektrischen Schwenkantrieb, der die Steuerwelle bewegt, um die Steuerbolzen in ihren Steuerkulissen zu führen und die Primärbacken und Sekundärbacken radial zu spannen oder zu entspannen.

In einer bevorzugten Ausführungsvariante der erfindungsgemäßen Anlage ist das das Rührreibschweißwerkzeug mit Sensor in Bezug auf die Stoßfuge von Flansch und Rohr in y- und z-Richt_ing an einem Kreuzschlitten durch Servomotore und in y-Richtung an einer Spindel durch einen Motor verfahrbar angeordnet ist, wobei der das Rührreibschweißwerkzeug tragende Kreuzschlitten an einem Brückenträger festgelegt ist, der in Richtung Längsachse des Rohres auf der zwischen den Einspanneinheiten am Maschinenbett verlegten Laufschienenpaar durch einen Servomotor verfahrbar ausgebildet und mit einer pneumatischen Bremse versehen ist.
Dies ermöglicht einerseits, das Rührreibschweißwerkzeug mit Sensor positionsgenau auf die momentan ermittelte Lage der Stoßfuge in allen drei Raumrichtungen einzustellen und die zum Rührreibschweißen erforderlichen Anpresskräfte auf die Stoßfuge aufzubringen sowie andererseits die gesamte Rührreibschweißeinheit zum Bearbeiten von verschieden langen Flansche in Längsrichtung des Rohres zu verfahren und in dieser Position zu arretieren.

Das axiale Spannen der Flansch-Rohr-Flansch-Anordnung wird in einer weiteren Ausführungsform der erfindungsgemäßen Anlage dadurch ermöglicht, dass die Flanschaufnahme der verfahrbaren Einspanneinheit durch pneumatische Druckzylinder axial verschieblich ausgebildet ist, wobei die Anpresskraft über ein Proportionalventil auf Werte zwischen 5000 bis 8000 N in Abhängigkeit der Dimensionierung von Rohr und Flansche einstellbar ist.

Eine weitere bevorzugte Ausführungsform der erfindungsgemäßen Anlage sieht vor, dass die Steuerung in eine an ein externes Strom- und Pressluftnetz angeschlossene, in der ortsfesten Einspanneinheit angeordnete Hauptsteuerung und eine in der verfahrbaren Einspanneinheit angeordnete Nebensteuerung aufgeteilt ist, wobei die Hauptsteuerung über eine, die Daten- und Steuerleitungen und Pneumatikleitungen aufnehmende flexible Verbindungsleitung mit der Nebensteuerung zum Versorgen der verfahrbaren Einspanneinheit mit Strom und Pressluft sowie zur Übertragung von Steuerbefehlen und zum Datenaustausch in Verbindung steht.

Besonders vorteilhaft ist, wenn die Direktantriebe für die Flanschaufnahmen der ortsfesten und verfahrbaren Einspanneinheit durch eine separate Steuerleitung mit der Hauptsteuerung verbunden sind. Dies gewährleistet die simultane Ansteuerung beider Direktantriebe, so dass sichergestellt ist, dass die Direktantriebe mit gleicher Drehzahl laufen.
Die weiteren elektrischen und pneumatischen Antriebe in beiden Einspanneinheiten wie die Servomotore für die Kreuzschlitten, die Rührreibwerkzeuge und die Vorrichtungen zum An- und Abfahren der Formkeile, der Servomotor zum Verfahren der verschieblichen Einspanneinheit, die pneumatischen Schwenkantriebe für die Spann- und Abstützscheiben, die pneumatischen Bremsen und pneumatischen Einheiten für die Träger der Kreuzschlitten und der verfahrbaren Einspannei.nheit sowie die Druckzylinder zum axialen Spannen der Flansch-Rohr-Flansch-Anordnung sind zweckmäßigerweise über ihre jeweilige Ansteuerelektronik (Nebensteuerung) und Proportionalventile mit der Hauptsteuerung durch eine separate Steuerleitung verbunden.

In einer weiteren bevorzugten Ausgestaltung der erfindungsgemäßen Anlage sind die Direktantriebe der Flanschaufnahmen Synchronmotore.
Zweckmäßigerweise sind die Direktantriebe mit mindestens zwei Winkellagegebern zur Ermittlung der Winkellage der Rotation des Flansch-Rohr-Flansch-Elements und zur Synchronisation versehen, die über die Hauptsteuerung mit der Vorrichtung zum An- und Abfahren des Formkeils verbunden sind.

Weiterhin ist von Vorteil, wenn jedem Rührreibschweißwerkzeug ein mit der Hauptsteuerung verbundener Sensor, beispielsweise ein Laser-Scanner, ein Bild-Sensor oder Linien-Laser, zugeordnet ist, dessen Auswerteelektronik mittels Graustufenanalyse die Lage der Stoßfuge in Rotationsrichtung ermittelt und diese an die Hauptsteuerung weiterleitet.

Von Vorteil ist auch, dass der Formkeil aus einem Material besteht, das werkstoffgleich mit dem des Flansches oder Rohres ist, so dass beim horizontalen Herausfahren der Rührreibschweißsonde keine werkstoffbedingten Beeinträchtigungen der rührreibgeschweißten Stoßfuge von Flansch und Rohr erfolgen können.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen

Fig. 1 eine schematische Darstellung der erfindungsgemäßen Anlage in Seitenansicht mit einer Flansch-Rohr-Flansch-Anordnung,

Fig. 2 eine Einzelheit A der Fig. 1 in vergrößerter Darstellung,

Fig. 3 eine Darstellung der Spann- und Abstützscheibe in Draufsicht im geöffneten Zustand von der Primärseite aus,

Fig. 4 eine Darstellung der Spann- und Abstützscheibe in Draufsicht im geöffneten Zustand von der Sekundärseite aus,

Fig. 5 eine perspektivische Darstellung der Spann-und Abstützscheibe im geöffneten Zustand,

Fig. 6 eine Darstellung der Spann- und Abstützscheibe in Draufsicht im geschlossenen Zustand von der Primärseite aus,

Fig. 7 eine Rückansicht der Spann- und Abstützscheibe mit montiertem Schwenkantrieb,

Fig. 8 einen Schnitt A-A gemäß Fig. 7,

Fig. 9 einen Schnitt B-B gemäß Fig. 10,

Fig.10 eine perspektivische Darstellung der Spann-und Abstützscheibe im gespannten (geschlossenen) Zustand,

Fig. 11 eine Prinzipdarstellung der Vorrichtung zum An- und Abfahren des Formkeils im angefahrenen Zustand und

Fig. 12 eine schematische Darstellung der erfindungsgemäßen Anlage in Seitenansicht.

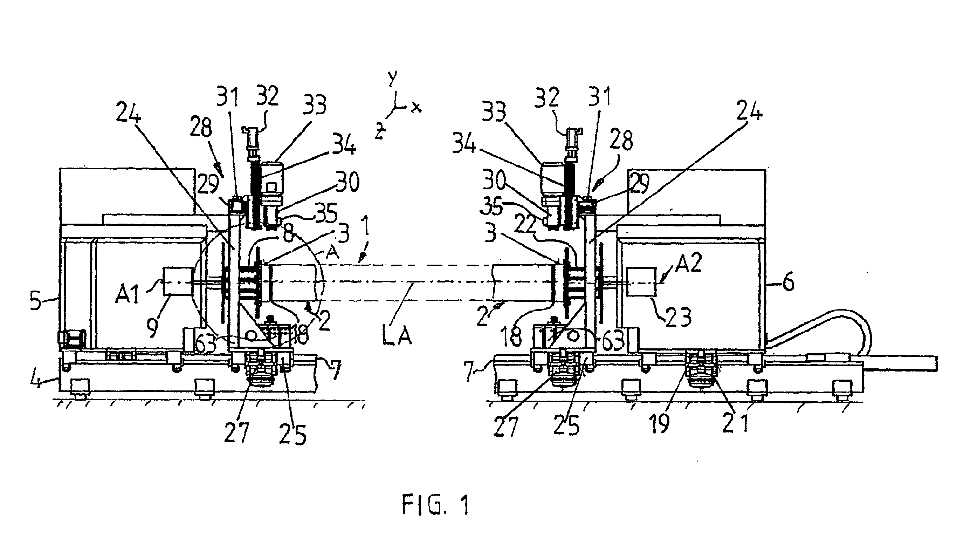

Die Fig. 1 zeigt die erfindungsgemäße Anlage schematisch in Seitenansicht mit Bestückung einer durch Rührreibschweißen zu verbindenden Flansch-Rohr-flansch-Anordnung 1, die sich in diesem Beispiel aus einem Aluminiumrohr 2 der Qualität EN-AW6083 und zwei an den Enden des Aluminiumrohrs 2 anzusetzende Flansche 3 der Gussqualität ALSi7Mg0.3 zusammensetzt. Das Aluminiumrohr 1 und die Flansche 3 haben einen identischen Innendurchmesser. Die Wandstärke von Flansch und Rohr beträgt 7 mm und die Länge des Rohres 8600 mm.
Die erfindungsgemäße Anlage setzt sich im Wesentlichen aus zwei im Abstand voneinander und in Flucht gegenüber angeordneten Einspanneinheiten 5 und 6 zusammen, von denen die Einspanneinheit 5 ortsfest festgelegt und die Einspanneinheit 6 auf an einem Maschinenbett 4 parallel nebeneinander verlegten Laufschienenpaar 7 verfahrbar ist.

Die ortsfeste Einspanneinheit 5, nachfolgend linke Einspanneinheit genannt, besitzt eine Flanschaufnahme 8, welche um eine horizontale Drehachse A1 drehbar ist und von einem Direktantrieb 9, vorzugsweise Synchronmotor, angetrieben wird.

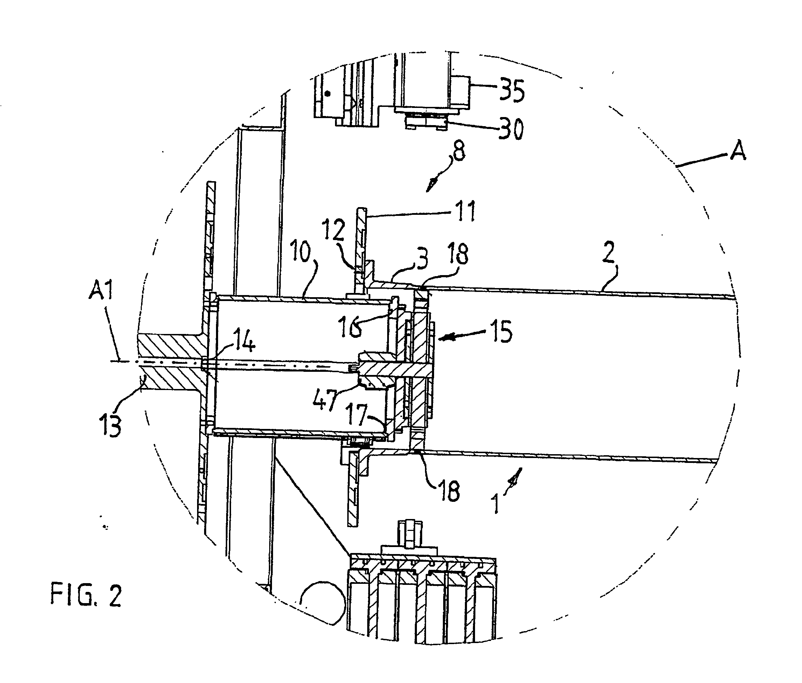

Die Flanschaufnahme 8 besteht -wie Fig. 2 zeigtaus einer zylindrischen Hülse 10 und einer an der Hülse 10 lösbar befestigten Planscheibe 11, welche mindestens einen Lochkreis aus Bohrungen 12 zur Befestigung des Flansches 3 mittels nicht dargestellter Schraubverbindungen aufweist. Es können mehrere Lochkreise mit unterschiedlichen Durchmessern auf der Planscheibe 11 vorgesehen sein, um Flansche 3 verschiedener Abmessungen befestigen zu können.
Die Hülse 10 ist einerends an der aus Hohlwelle ausgeführten Antriebswelle 13 des Synchronmotors 9 befestigt, so dass durch diese eine Pneumatikleitung 14 für den Antrieb des im Abschnitt [0045] beschriebenen Schwenkantriebes 47 für die Spann- und Abstützscheibe 15 geführt werden kann. Anderenends weist die Hülse 10 einen Befestigungsflansch 16 zur Befestigung der Spann- und Abstützscheibe 15 auf.
Die Planscheibe 11 ist gegenüber dem aufragenden Hülsenende 17 in solch einem Abstand zurückversetzt angeordnet, dass der an der Planscheibe 11 befestigte Flansch 3 mit seinem Rohrteil gegenüber dem Hülsenende 17 vorsteht, wodurch unter dem Stumpfstoß 18 zwischen Flansch 3 und Rohr 2 ein ausreichender Platz zum Einbringen für die Spann- und Abstützscheibe 15 verbleibt.

Es wird jetzt wieder auf die Fig. 1 Bezug genommen. Die verfahrbare Einspanneinheit 6, nachfolgend rechte Einspanneinheit genannt, entspricht im Wesentlichen dem beschriebenen Aufbau der linken Einspanneinheit 5, jedoch mit dem Unterschied, dass die rechte Einspanneinheit 6 einen eigenen Antrieb 19, vorzugsweise einen Servomotor, zum Verfahren der Einspanneinheit 6 auf dem Laufschienenpaar 7 in Richtung der Einspanneinheit 5, und eine eigene, über ein Proportionalventil 20 auslösbare pneumatische Bremse 21 zum Arretieren der Lage der Einspanneinheit 6 auf dem Laufschienenpaar 7 aufweist.
Die zur rechten Einspanneinheit 6 gehörende Flanschaufnahme 22 entspricht der Flanschaufnahme 8 der linken Einspanneinheit 5, so dass darauf verwiesen werden kann.
Die Flanschaufnahme 22 ist drehbar um die Drehachse A2 und wird von einem eigenen Direktantrieb 23, vorzugsweise einem Synchronmotor, angetrieben. Die Drehachse A1 der Flanschaufnahme 8 und die Drehachse A2 der Flanschaufnahme 22 liegen auf einer Flucht sich gegenüber und spannen eine gemeinsame Längsachse auf.
Das axiale Einspannen des Rohres 2 zwischen den Flanschen 3 wird beim Anfahren der rechten Einspanneinheit 6 gegen das Stirnende des Rohres 2 pneumatisch durchgeführt, wobei die Anpresskraft durch Druckzylinder erzeugt und in Abhängigkeit der Dimensionierung von Rohr und Flansche auf Werte zwischen 5000 bis 8000 N eingestellt wird.

Jeder Einspanneinheit 5 bzw. 6 ist ein Brückenträger 24 zugeordnet, der mittels eines Servomotors 25 auf dem Laufschienenpaar 7 -also in x-Richtung-, verfahrbar ist und eine durch ein Proportionalventil 26 betätigbare pneumatische Bremse 27 sowie eine pneumatische Einheit 63 zum Versteifen und Ausgleichen von Vibrationen beim Bearbeiten aufweist. Der Brückenträger 24 umgreift die Flanschaufnahmen 8 bzw. 22 und lässt sich somit in x-Richtung in eine exakte Lage über den Stumpfstoß 18 verfahren und arretieren. An der Brücke 28 des Brückenträgers 24 ist ein Kreuzschlitten 29 befestigt, mit dem das Rührreibschweißwerkzeug 30 mittels eines Servomotors 31 in y-Richtung und eines Servomotors 32 in z-Richtung positioniert werden kann. Die zum Rührreibschweißen erforderlichen Anpresskräfte zwischen Rührreibschweißsonde und dem Stumpfstoß 18 werden durch eine mit einem Motor 33 angetriebene Werkzeugspindel 34 aufgebracht.
Jedem Rührreibschweißwerkzeug 30 ist ein Sensor 35 zugeordnet, der die Lage des Stumpfstoßes 18 abtastet, mit seiner Auswerteelektronik die Lage des Stoßes ermittelt und diese an die im Abschnitt [0048] näher beschriebene Hauptsteuerung 53 weiterleitet.

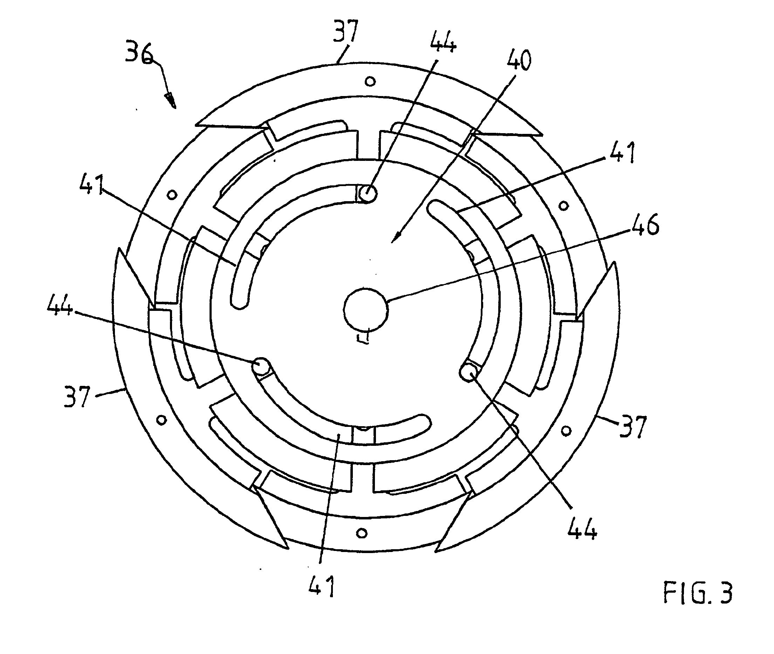

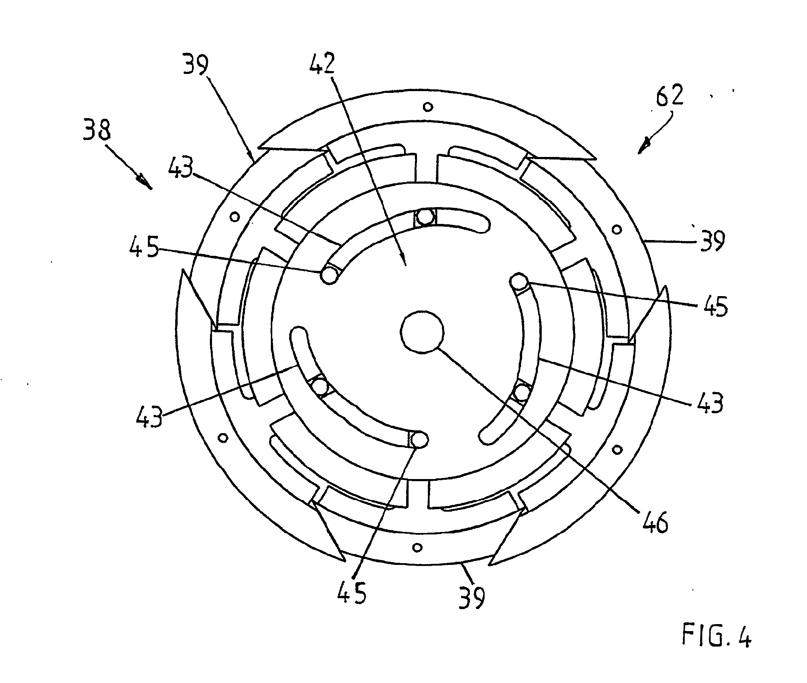

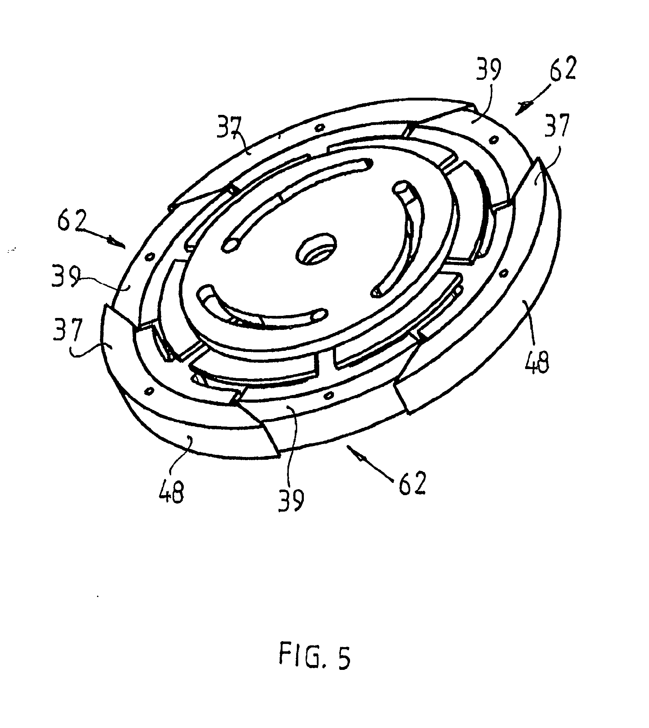

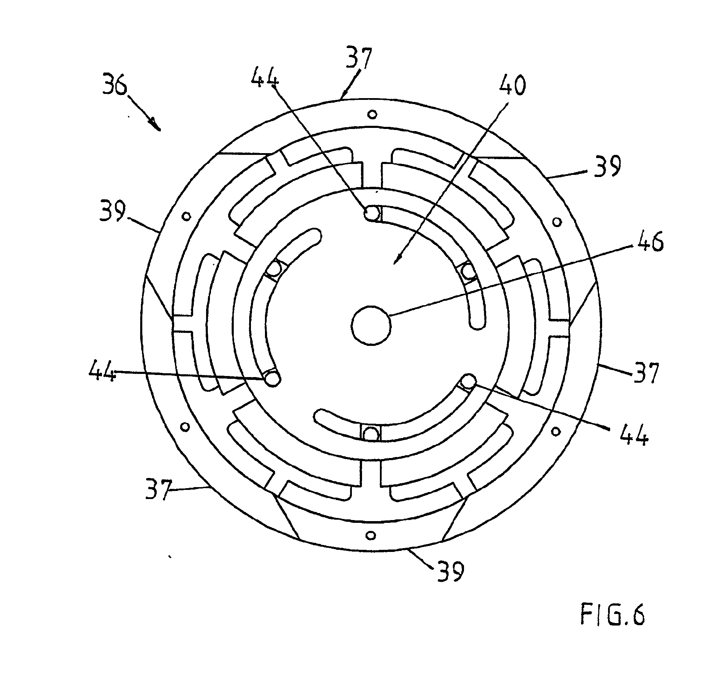

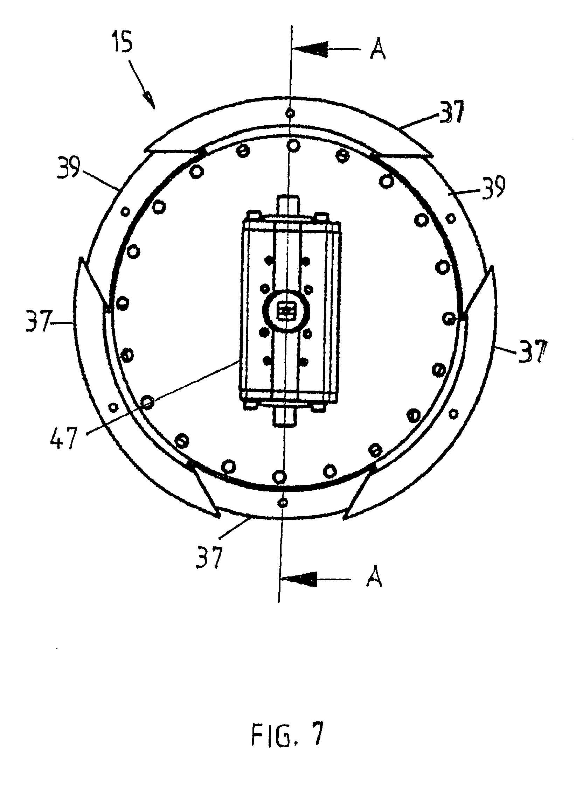

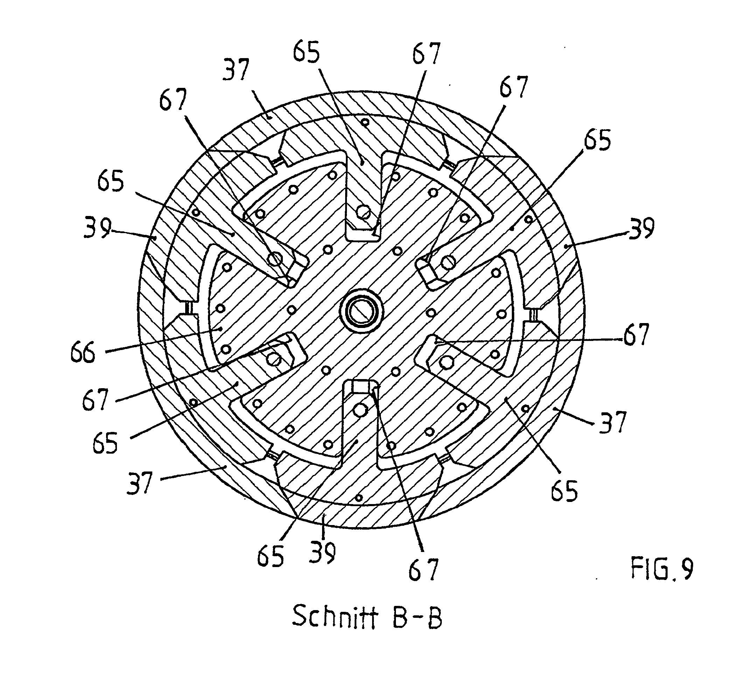

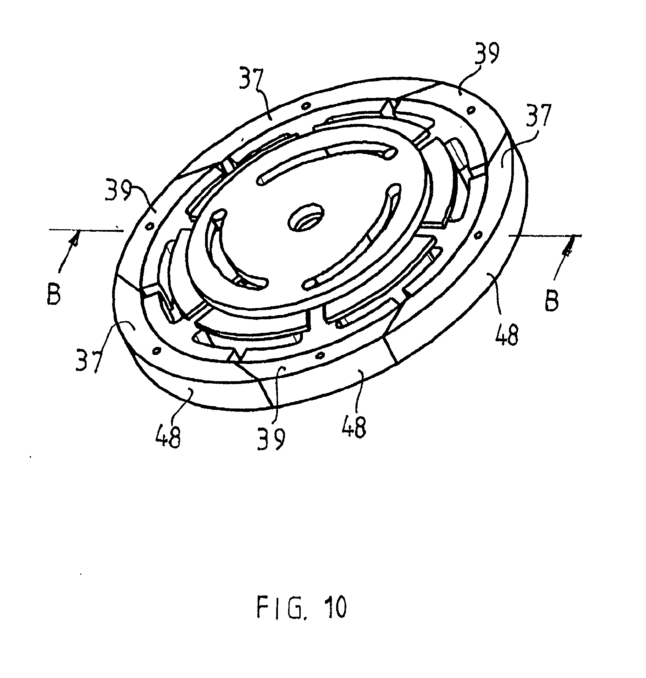

Die Fig. 3 bis 10 zeigen die pneumatische Spann-und Abstätzscheibe 15, die sich aus einem Primärbackenkörper 36 mit einzelnen Primärbacken 37, einem Sekundärbackenkörper 38 mit einzelnen Sekundärbacken 39, einer Primärsteuerscheibe 40 mit darin eingearbeiteter Steuerkulisse 41, einer Sekundärsteuerscheibe 42 mit darin eingearbeiteter Steuerkulisse 43, Steuerbolzen 44 und 45, die in den Steuerkulissen 41 und 43 geführt und mit der jeweiligen Primär- und Sekundärbacken 37 bzw. 39 verbunden sind, einer mit den Steuerscheiben 40 und 42 fest verbundenen Steuerwelle 46 und einem pneumatischen Schwenkantrieb 47.
Die mindestens drei Primärbacken 37 sind auf Lücke 62 im Abstand voneinander kreissegmentförmig am Umfang der Spann-und Abstützscheibe 15 angeordnet von einem Steg- und Haltelement 65 getragen, das in radial angeordneten Ausnehmungen 67 eines Trägerelementes 66 linear in radialer Richtung verschiebbar einliegt (siehe Fig. 9). Jedes Steg-und Halteelement 65 verfügt über einen senkrecht aufragenden Steuerbolzen 44 (siehe Fig. 3 bis 6).
Die Primärsteuerscheibe 40 besitzt für jede Primärbacke 37 eine Steuerkulisse 41 zum Führen der Steuerbolzen 44 der Primärbacken 37.
Mindestens drei Sekundärbacken 39 sind entlang des Umfangs der Spann- und Abstützscheibe 15 zueinander versetzt kreissegmentförmig so angeordnet, dass sie jeweils die Lücken 62 zwischen zwei Primärbacken 37 ausfüllen können. Die Steuerbolzen 45 der Sekundärbacken 39 ragen ebenso senkrecht auf.
In der Sekundärsteuerscheibe 42 ist für jede Sekundärbacke 39 eine Steuerkulisse 43 eingebracht, in der der entsprechende Steuerbolzen 45 geführt wird (siehe Fig.3 und 4).
Die Steuerwelle 46 ist fest mit der Primärsteuerscheibe 40 und der Sekundärsteuerscheibe 42 verbunden, so dass bei einer vcm pneumatischen Schwenkantrieb 47 veranlassten Bewegung der Steuerbolzen 44 und 45 in ihren Steuerkulissen 41 und 43, beim Spannen zunächst die Primärbacken 37 radial nach außen bewegt und sodann die Lücken zwischen den Primärbacken 37 durch die Sekundärbacken 39 ausgefüllt werden sowie beim Entspannen bzw. Lösen die Sekundärbacken 39 radial aus den Lücken zwischen den Primärbacken 37 nach innen eingefahren und dann die Primärbacken 37 entspannt werden. Die Spann- und Abstützscheibe 15 bildet im gespannten Zustand entlang ihres äußeren Umfangs einen vollkommene geschlossene Stirnbereich 48, der beispielsweise eine Breite zwischen 10 mm bis 50 mm, vorzugsweise 30 mm besitzen kann (siehe Fig. 5 und 10).

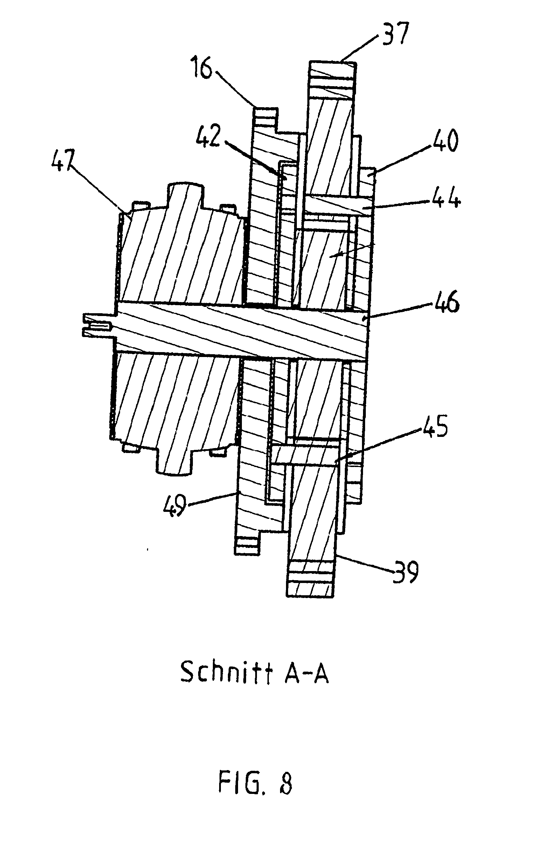

Die Spann- und Abstützscheibe 15 liegt mit ihrem Befestigungsflansch 49 am Befestigungsflansch 16 (siehe Fig. 8) der Hülse 10 exakt fest, stützt sich an diesem ab und nimmt in Bezug auf den Stumpfstoß 18 eine Funktion in dreierlei Hinsicht wahr, und zwar als Schweißbadsicherung zur Stabilisierung des erweichten Stoßbereiches in vertikaler und axialer Richtung, Widerlager für die vom Rührreibschweißwerkzeug 30 aufgebrachten Anpresskräfte und Zentriermittel zum Ausrichten der Längsachse des Rohres 2 nach den Drehachsen A1 und A2 der Flanschaufnahmen 8 bzw. 22.

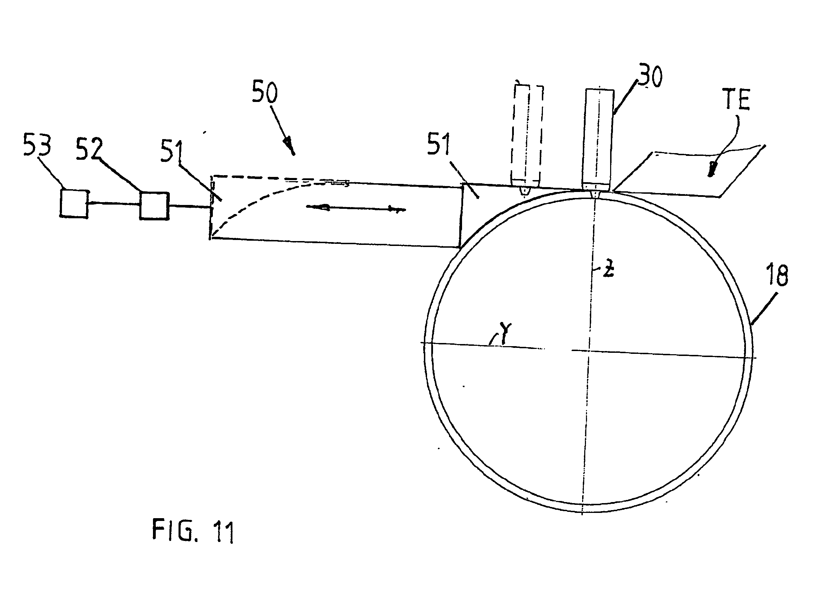

Weiterhin ist jeder Einspanneinheit 5 bzw. 6 eine Vorrichtung 50 zum An- und Abfahren eines Formkeiles 51 in Flucht der horizontal oberhalb der Drehachsen A1 und A2 liegenden, durch die Stoßfuge 18 verlaufenden Tangentialebene TE zugeordnet (siehe Fig. 11). Das An- und Abfahren des Formkeils 51 erfolgt mittels eines Servomotors 52, der mit der Hauptsteuerung 53 verbunden ist und in Abhängigkeit von der Winkellage der Rotation des Flansch-Rohr-Flansch-Elementes von dieser betätigt wird, sobald das Flansch-Rohr-Flansch-Element einen Rotationswinkel von 350° bis 358°, vorzugsweise 355°, erreicht hat. Die Rotation des Flansch-Rohr-Flansch-Elements wird gestoppt Die Rührreibschweißsonde des Rührreibschweißwerkzeugs 30 wird
dann in den Formkeil 51 in Richtung Tangentialebene TE (y-Richtung) ausgefahren und anschließend die Rotation des Flansch-Rohr-Flansch-Elementes nach Erreichen einer Winkellage von 365° gestoppt.
Dies stellt sicher, dass die Rührreibschweißsonde des Rührreibschweißwerkzeugs 30 aus der rührreibgeschweißten Stoßfuge 18 herausgefahren werden kann, ohne ein Loch in der rührreibgeschweißten Stoßfuge 18 zu hinterlassen.

Die Steuerung weist eine Hauptsteuerung 53, die an ein externes Stromnetz 54 und ein Pressluftnetz 55 zur Versorgung der Anlage mit Strom und Pressluft angeschlossen ist, und eine Nebensteuerung 56 auf. Die Hauptsteuerung 53 ist in der linken Einspanneinheit 5 untergebracht, die mit der Nebensteuerung 56 durch eine flexible Verbindungsleitung 59 in Form einer Schleppkette verbunden ist. Von der Verbindungsleitung 59 werden die Daten- und Steuerleitungen 57 bzw. 58 und die Strom- und Pressluftleitungen 60 bzw. 61 aufgenommen, um alle zur rechten Einspanneinheit 6 gehörenden Aggregate mit Strom und Pressluft zu versorgen, Daten zu übertragen oder auszutauschen und Steuerbefehle weiterzuleiten.

Zur Synchronisation des Direktantrieb 9 der Flanschaufnahme 8 mit dem Direktantrieb 23 der Flanschaufnahme 22 stehen beide Direktantriebe mit der Hauptsteuerung 53 über die separate, direkte und schnelle Datenleitung 57 in Verbindung, so dass beide Flanschaufnahmen 8 bzw. 22 mit gleicher Geschwindigkeit drehen.
Durch die Steuerleitung 58 sind die Servomotore 31 bzw. 32 für den Kreuzschlitten 29, der Motor 33 für die Werkzeugspindel 34 des Rührreibschweißwerkzeugs 30, der Servomotor 25 für den Brückenträger 24, die Servomotore 52 für das An- und Abfahren der Formkeile 51 über ihre Ansteuerelektronik, die Sensoren 35 über ihre Auswerteelektronik, die Bremsen 27 und die pneumatischen Einheiten 63 für die Brückenträger 24, die Bremse 21 für die rechte Einspanneinheit 6 und die Schwenkantriebe 47 für die Spann- und Abstützscheiben 15 über ihre jeweiligen Proportionalventile 26, 20 bzw. 62, 64 mit der Hauptsteuerung 53 verbunden.
Zur Nebensteuerung 56 gehört die Ansteuer- und Auswerteelektronik aller zur rechten Einspanneinheit 6 untergebrachten Aggregate.

Die Direktantriebe 9 und 23 sind zur Ermittlung der Winkellage der Rotation des Flansch-Rohr-Flansch-Elementes mit je zwei Winkellagegebern versehen, deren Datenleitungen mit der Hauptsteuerung 53 verbunden sind, die die Daten verarbeitet und das An- und Abfahren des Formkeils 51 mit der Vorrichtung 50 entsprechend der detektierten Winkellage auslöst und stoppt.

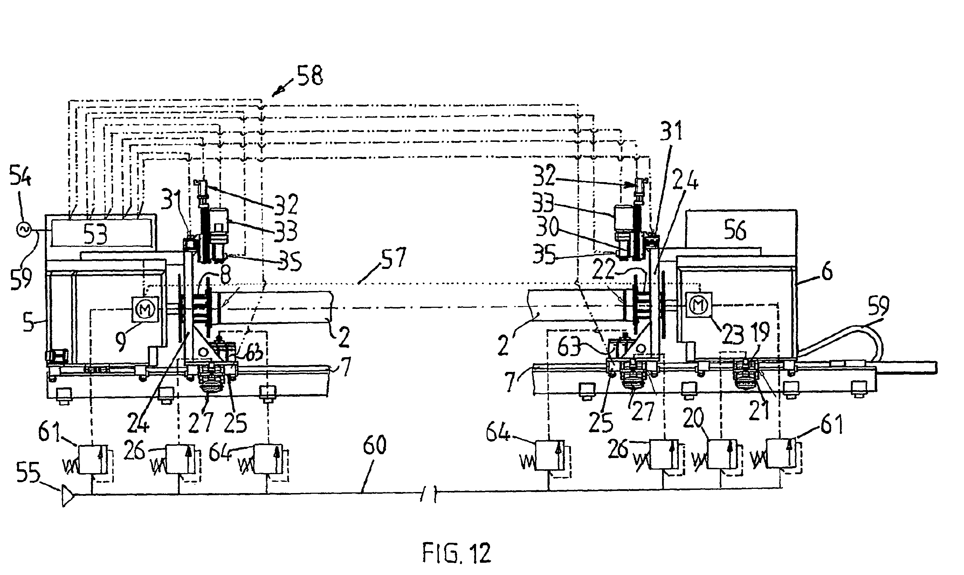

Der Ablauf des erfindungsgemäßen Verfahrens wird nachfolgend mit Hilfe der Fig. 12 in Verbindung mit der Fig. 1 beschrieben.
Die Flansche 3 werden an der Planscheibe 11 der drehbaren Flanschaufnahme 8 der linken Einspanneinheit 5 und an der Planscheibe 11 der drehbaren Flanschaufnahme 22 der rechten Einspanneinheit 6 so befestigt, dass die Längsachsen der Flansche 3 mit den Drehachsen A1 und A2 der Flanschaufnahmen 8 bzw. 22 übereinstimmen. Die Spann- und Abstützscheiben 15 werden wie im Abschnitt [0046] beschrieben in das offene Stirnende des Flansches 3 eingeschoben und pneumatisch fixiert.
Dies geschieht dadurch, dass beim Spannvorgang die Spann- und Abstützscheibe 15 mit ihren durch Lücken 62 voneinander beabstandeten Primärbacken 37 in einem ersten Spannzustand etwa 65 bis 70% der Innenumfangs von Flansch und Rohr im Stoßbereich erfasst und in einem zweiten Spannzustand durch ein radiales Ausfahren der Sekundärbacken 39 in die Lücken 62 zwischen den Primärbacken 37 in Richtung Innenwand von Flansch 3 und Rohr 2 der gesamte Innenumfang beaufschlagt wird, so dass der Stirnbereich 48 der Spann- und Abstützscheibe 15 eine geschlossene Fläche für die Schweißbadsicherung, das Widerlager für die Anpresskräfte beim Rührreibschweißen und zum Spannen gegen die Innenwand bilden kann. Zum Lösen der Spann- und Abstützscheibe 15 werden zunächst die Sekundärbacken 39 aus dem Bereich zwischen den Primärbacken 37 und dann die Primärbacken 37 radial entgegengesetzt zur Innenwand von Rohr 2 und Flansch 3 eingefahren.

Die rechte Einspanneinheit 6 wird dann soweit auf dem Laufschienenpaar 7 verfahren bis der Abstand zwischen den beiden Einspanneinheiten 5 und 6 gegenüber der Rohrlänge des Rohres 2 etwas größer ist, so dass eine ausreichende Montagefreiheit vorhanden ist und das mit einem nichtdargestellten Hebemittel angehobene Rohr 2 bis in die von den Drehachsen A1 und A2 aufgespannte Flucht zwischen den beiden Flanschaufnahmen 8 und 22 abgesenkt werden kann. Das erfindungsgemäße Verfahren läuft wie dann wie folgt ab:
A) Zentrieren der Längsachse des Rohres 2 nach der inneren Geometrie von Flansch 3 und Rohr 2 auf die Drehachsen A1 und A2 der Einspanneinheiten 5 und 6 durch eine in das Stoßende des Flansches 3 spannend eingreifende, in das Stoßende des Rohres 2 spannend übergreifende, zugleich die Schweißbadsicherung übernehmende Spann- und Abstützscheibe 15,
B) Abtasten der Stoßfugen 18 am Außenumfang von Flansch 3 und Rohr 2 während ihrer Rotation um die Drehachse durch je einen Sensor 35 in Rotationsrichtung, Ermitteln der momentanen Lage des Stoßes 18 durch Verarbeitung der Sensordaten durch eine Auswerteelektronik und Weiterleiten dieser Daten an die Hauptsteuerung 53 zur Regelung der Position der Rührreibschweißsonde in x-, y- und z-Richtung,
C) Anfahren und Andrücken eines an den Durchmesser von Rohr 2 und Flansch 15 angepassten Formkeils 51 an das rotierende Flansch-Rohr-Flansch-Element in Flucht der durch die oberhalb der Drehachse A1,A2 liegenden Stoßfugen 18 horizontal verlaufenden Tangentialebene TE, sobald das Flansch-Rohr-Flansch-Element eine Rotation um 350° bis 358°, vorzugsweise 355°, ausgeführt hat, sodann der Formkeil 51 in schleifend angedrückter Lage an dem rotierenden Flansch-Rohr-Flansch-Element verbleibt und bei Erreichen einer Winkellage von 362° bis 370°, vorzugsweise 365°, die Rotation des Flansch-Rohr-Flansch-Elements gestoppt, gleichzeitig die Rührreibschweißsonde des Rührreibschweißwerkzeugs 30 in den Formkeil 51 in Richtung Tangentialebene (TE) gefahren und das von der Rührreibschweißsonde hinterlassende Loch durch Material des Formkeils 51 verfüllt wird,
D) Abfahren des Formkeils 51 vom Flansch-Rohr-Flansch-Element und Entnahmen des fertigen Flansch-Rohr-Flansch-Elementes nach Lösen der Spann- und Abstützscheiben 15 und axialem Entspannen und Zurückfahren der verfahrbaren Einspanneinheit 6.
Das Besondere des erfindungsgemäßen Verfahren beruht darauf, dass die Flansche und das Rohr zueinander in einem zweistufigen Zentriervorgang in ihre Stoßlage gebracht werden, indem zunächst die Flansche so an den Flanschaufnahmen befestigt werden, dass ihre Längsachsen mit der Drehachse der jeweiligen Flanschaufnahme zusammenfallen, und anschließend die Längsachse des Rohrs auf die mit den Längsachsen der Flansche zusammenfallenden Drehachsen A1 und A2 der Flanschaufnahmen 8 und 22 zentriert wird. Hierdurch ist gewährleistet, dass der Zentriervorgang zwangsweise in Abhängigkeit der Geometrie von Flansch und Rohr abläuft, ohne dass ein spezifischer Mess- und Einrichtvorgang erforderlich ist.

Bczugszeichenliste

| | |
|---|---|
| Flansch-Rohr-Flansch-Anordnung/Element | 1 |
| Aluminiumrohr | 2 |
| Flansche | 3 |
| Maschinenbett | 4 |
| Linke (ortsfeste) Einspanneinheit | 5 |
| Rechte (verfahrbare) Einspanneinheit | 6 |
| Laufschienenpaar | 7 |
| Flanschaufnahme an 5 | 8 |
| Direktantrieb für 8 | 9 |
| Hülse | 10 |
| Planscheiben | 11 |
| Bohrungen in 11 | 12 |
| Antriebswelle von 9, | 13 |
| Pneumatikleitung für 47 | 14 |
| Spann- und Abstützscheibe | 15 |
| Befestigungsflansch an 10 | 16 |
| Hülsenende | 17 |
| Stumpfstoß von 2 und 3, Verbindungsfuge | 18 |
| Separater Antrieb für 6 | 19 |
| Proportionalventil für 21 | 20 |
| Pneumatische Bremse von 6 | 21 |
| Flanschaufnahme an 6 | 22 |
| Direktantrieb für 22 | 23 |
| Brückenträger | 24 |
| Servomotor für 24 | 25 |
| Proportionalventil für 27 | 26 |
| Bremse für 24 | 27 |
| Brücke von 24 | 28 |
| Kreuzschlitten | 29 |
| Rührreibschweißwerkzeug | 30 |
| Servomotor für 29 | 31, 32 |
| Antiebsmotor für 30 | 33 |
| Werkzeugspindel | 34 |
| Sensor mit Auswerteelektronik | 35 |
| Primärbackenkörper | 36 |
| Primärbacken | 37 |
| Sekundärbackenkörper | 38 |
| Sekundärbacken | 39 |
| Primärsteuerscheibe | 40 |
| Steuerkulisse in 40 | 41 |
| Sekundärsteuerscheibe | 42 |
| Steuerkulisse in 42 | 43 |
| Steuerbolzen | 44, 45 |
| Steuerwelle | 46 |
| Pneumatischer Schwenkantrieb | 47 |
| Stirnbereich | 48 |
| Befestigungsflansch | 49 |
| Vorrichtung zum An- und Abfahren | 50 |
| des Formkeils | 51 |
| Servomotor für 51 | 52 |
| Steuerung, Hauptsteuerung | 53 |
| Externes Stromnetz | 54 |
| Pressluftnetz | 55 |
| Nebcnsteuerung | 56 |
| Daten- und Steuerleitungen | 57 |
| Flexible Verbindungsleitung | 58 |
| Stromleitung | 59 |
| Pressluftleitung | 60 |
| Proportionalventil für 47 | 61 |
| Lücken | 62 |
| Pneumatische Einheit | 63 |
| Proportionalventil für 63 | 64 |
| Steg- und Haltelement für 37 und 39 | 65 |
| Trägerelement | 66 |
| Aussparungen | 67 |
| Drehachsen der Flanschaufnahmen | A1, A2 |
| Längsachse Rohr | LA |
| Raumrichtung | x, y, z |
| Tangentialebene | TE |

## Patentansprüche

1. Verfahren zum Herstellen eines Flansch-Rohr-Flansch-Elementes mittels Rührreibschweißen, bei dem die Flansche (3) an je einer von durch einen Direktantrieb (9,22) angetriebene, um die Längsachse des Flansches (3) drehbare Flanschaufnahmen (8,22) gegeneinander ausgerichteter Einspanneinheiten (5,6) fixiert werden, die entlang der Drehachsen (A1,A2) der Flanschaufnahmen (8,22) eine gemeinsame Längsachse aufspannen, wobei eine Einspanneinheit (5) ortsfest ist und die andere (6) gegen letztere in Flucht der Drehachsen zum axialen Einspannen eines Rohres (2) zwischen den Flanschen (3) unter Bildung eines Stumpfstoßes (18) so verfahren wird, dass das eingespannte Rohr (2) zusammen mit den Flanschen (3) um die Drehachse (A1,A2) durch die Flanschaufnahmen (8,22) in Rotation versetzt werden kann und zugleich mit dieser Rotationsbewegung senkrecht in die oberhalb der Drehachse liegenden Stoßfuge (18) eine auf das Material von Rohr (2) und Flansch (3) abgestimmt rotierende Rührreibschweißsonde eines Rührreibschweißwerkzeugs (30) mit Anpresskraft abgesenkt, die Reaktionskraft für die Anpresskraft von einer unter der Stoßfuge (18) im Inneren von Flansch (3) und Rohr (3) zugeordneten Schweißbadsicherung aufgebracht wird, während die Rührreibschweißsonde in die Stoßfuge (18) eindringt, deren Materialbereiche erweicht, rührt und innerhalb eines Umlaufes miteinander verbindet, wobei die Rotationsgeschwindigkeit des Flansch-Rohr-Flansch-Elementes, die Drehgeschwindigkeit und die Anpresskraft der Rührreibschweißsonde von einer Steuerung (53) zentral eingestellt werden, **gekennzeichnet durch** folgende Schritte:
A) Zentrieren der Längsachse (LA) des Rohres (2) nach den inneren Geometrien von Flansch (3) und Rohr (2) auf die Drehachsen der Flanschaufnahmen (8,22) **durch** eine in das Stoßende des Flansches spannend eingreifende, in das Stoßende des Rohres spannend übergreifende, zugleich die Schweißbadsicherung übernehmende Spann- und Abstützscheibe (15),
B) Abtasten der Stoßfuge (18) am Außenumfang von Flansch (3) und Rohr (2) während ihrer Rotation um die Drehachse **durch** je einen Sensor (35) in Rotationsrichtung, Ermitteln der momentanen Lage des Stoßes (18) **durch** Verarbeitung der Sensordaten mit einer Auswerteelektronik und Weiterleiten dieser Daten an die Steuerung (53) zur Regelung der Position der Rührreibschweißsonde in x-, y- und z-Richtung, und
C) Anfahren und Andrücken eines an den Durchmesser von Rohr (2) und Flansch (15) angepassten Formkeils (51) an das rotierende Flansch-Rohr-Flansch-Element in Flucht der **durch** die oberhalb der Drehachse (A1,A2) liegenden Stoßfugen (18) horizontal verlaufenden Tangentialebene (TE), sobald das Flansch-Rohr-Flansch-Element eine Rotation um 350° bis 358°, vorzugsweise 355°, ausgeführt hat, sodann der Formkeil (51) in schleifend angedrückter Lage an dem rotierenden Flansch-Rohr-Flansch-Element verbleibt und bei Erreichen einer Winkellage von 362° bis 370°, vorzugsweise 365°, die Rotation des Flansch-Rohr-Flansch-Elements gestoppt, gleichzeitig die Rührreibschweißsonde des Rührreibschweißwerkzeugs (30) in den Formkeil (51) in Richtung Tangentialebene (TE) gefahren, das von der Rührreibschweißsonde hinterlassende Loch **durch** Material des Formkeils (51) verfüllt wird;
D) Abfahren des Formkeils (51) vom Flansch-Rohr-Flansch-Element und Entnehmen des fertigen Flansch-Rohr-Flansch-Elementes nach Lösen der Spann- und Abstützscheiben (15) und axialem Entspannen der Einspanneinheiten (5,6) und Zurückfahren der verfahrbaren Einspanneinheit (6).

2. Verfahren nach Anspruch 1, **dadurch gekennzeichnet, dass** die Flansche (3) und das Rohr (2) zueinander in einem zweistufigen Zentriervorgang in ihre Stoßlage gebracht werden, indem zunächst die Flansche (3) so an den Flanschaufnahmen (8,22) befestigt werden, dass ihre Längsachsen mit der Drehachse (A1,A2) der jeweiligen Flanschaufnahme (8,22) zusammenfallen, und anschließend die Längsachse (LA) des Rohrs (2) auf die mit den Längsachsen der Flansche zusammenfallenden Drehachsen (A1,A2) der Flanschaufnahmen (8,22) zentriert wird.

3. Verfahren nach Anspruch 1, **dadurch gekennzeichnet, dass** als Direktantriebe (9,23) für die Flanschaufnahmen (8,22) Synchronmotore eingesetzt werden, welche die Flanschaufnahmen (8,22) synchron mit gleicher Drehzahl antreiben, so dass die Stoßfugen (18) von Rohr (2) und Flansch (3) an beiden Rohrenden durch die Rührreibschweißsonden simultan bearbeitet werden können.

4. Verfahren nach Anspruch 1, **dadurch gekennzeichnet, dass** das axiale Einspannen des Rohres (2) zwischen den Flanschen (3) pneumatisch durchgeführt wird, wobei die Anpresskraft durch Druckzylinder erzeugt und in Abhängigkeit der Dimensionierung von Rohr (2) und Flansche (3) auf Werte zwischen 5000 bis 8000 N eingestellt wird.

5. Verfahren nach Anspruch 1, **dadurch gekennzeichnet, dass** die Spann- und Abstützscheibe (15) pneumatisch, hydraulisch oder elektrisch betrieben wird.

6. Verfahren nach Anspruch 1 oder 4, **dadurch gekennzeichnet, dass** beim Spannvorgang die Spann- und Abstützscheibe (15) in einem ersten Spannzustand etwa 65 bis 70% der Innenumfangs von Flansch und Rohr im Stoßbereich mittels durch Lücken (62) voneinander beabstandeter Primärbacken (37) und in einem zweiten Spannzustand der gesamte Innenumfang durch ein radiales Ausfahren von Sekundärbacken (39) in die Lücken zwischen den Primärbacken (37) in Richtung Innenwand von Flansch (3) und Rohr (2) beaufschlagt wird, so dass der Stirnbereich (48) der Spann- und Abstützscheibe (15) eine geschlossene Fläche für die Schweißbadsicherung, das Widerlager für die Anpresskräfte beim Rührreibschweißen und zum Spannen gegen die Innenwand bildet, und dass zum Lösen der Spann- und Abstützscheibe (15) zunächst die Sekundärbacken (39) aus dem Bereich zwischen den Primärbacken (37) und dann die Primärbacken (37) radial entgegengesetzt zur Innenwand von Rohr (2) und Flansch (3) eingefahren werden.

7. Verfahren nach Anspruch 1, **dadurch gekennzeichnet, dass** die Winkellage der Rotation des Flansch-Rohr-Flansch-Elementes durch einen Winkellagegeber der Direktantriebe (9,23) ermittelt und an die Steuerung zum Auslösen des An- und Abfahrens des Formkeils (51) weitergeleitet wird.

8. Verfahren nach Anspruch 1, **dadurch gekennzeichnet, dass** als Sensor (35) ein Laser-Scanner, ein Bild-Sensor oder Linien-Laser verwendet wird.

9. Verfahren nach Anspruch 1, **dadurch gekennzeichnet, dass** jeder Rührreibschweißsonde ein Sensor zugeordnet ist.

10. Verfahren nach Anspruch 1, **dadurch gekennzeichnet, dass** als Werkstoff für das Flansch-Rohr-Flansch-Element und den Formkeil Leichtmetalle oder Leichtmetalllegierungen wie Aluminium, Aluminium-Magnesium-, Aluminium-Magnesium-Siliziumlegierungen, Kupferlegierungen oder andere Legierungen aus Eisen oder Nichteisenmetalle eingesetzt werden.

11. Anlage zum Herstellen eines Flansch-Rohr-Flansch-Elementes mittels Rührreibschweißen, mit Einspanneinheiten (5,6), an denen je ein an einer Flanschaufnahme (8,22) fixierter Flansch (3) durch einen Direktantrieb (9,23) drehbar um seine mit der Drehachse (A1, A2 der Flanschaufnahme (8,22) zusammenfallende Längsachse angeordnet ist, wobei die Einspanneinheiten (5,6) zueinander in Flucht auf die Längsachsen ausgerichtet sind und eine gemeinsame Drehachse aufspannen, wobei die Einspanneinheit (5) ortsfest und die andere (6) gegen letztere zum axialen Einspannen des Rohres (2) zwischen den Flanschen (3) unter Bildung von Stumpfstößen (18) an beiden Rohrenden durch einen Antrieb (19) auf einem Laufschienenpaar (7) verfahrbar ausgebildet ist, so dass das eingespannte Rohr (2) und die Flansche (3) eine Rotation um die Drehachsen (A1,A2) ausführen, einem jeder Einspanneinheit (5,6) zugeordneten Rührreibschweißwerkzeug (30), das in Bezug auf den jeweiligen Stumpfstoß (18) horizontal und vertikal durch einen Kreuzschlitten (29) zustellbar ist, einer im Inneren von Flansch (3) und Rohr (2) unterhalb der Stoßfuge (18) angeordneten Schweißbadsicherung und einer Steuerung (53), die mit den Direktantrieben (9,23) der Flanschaufnahmen (8,22) und den Antrieben (33) für das Rührreibschweißwerkzeug (30) zum Einstellen der Rotationsgeschwindigkeit von Rohr (2) und Flansch (3) sowie der Zustellung des Rührreibschweißwerkzeugs und dessen Drehgeschwindigkeit in Verbindung steht, **dadurch gekennzeichnet, dass** die Schweißbadsicherung als eine pneumatisch spann- und lösbare Spann- und Abstützscheibe (15) zum Zentrieren des Rohres (2) auf die Drehachse (A1,A2) der Flansche (3) und zum Aufnehmen der Anpresskräfte beim Rührreibschweißen ausgebildet ist, und dass ein Sensor (35) zum Abtasten der Stoßfugen (18) zwischen Rohr (2) und Flansch (3) vorgesehen ist, und dass weiter eine Vorrichtung (50) zum An- und Abfahren eines Formkeiles (51) in Flucht der horizontal oberhalb der Drehachse liegenden, durch die Stoßfuge (18) verlaufenden Tangentialebene (TE) vorgesehen ist, um die Rührreibschweißsonde des Rühreibschweißwerkzeuges (30) lochfrei aus der rührreibschweißgeschweißten Stoßfuge (18) herauszubewegen, wobei der Sensor (35) und die Vorrichtung (50) zum An- und Abfahren des Formkeils (51) mit der Steuerung verbunden ist.

12. Anlage nach Anspruch 11, **dadurch gekennzeichnet, dass** die Spann- und Abstützscheibe (15) umfasst:
a) einen Primärbackenkörper (36) aus mindestens drei Primarbacken (37), die unter Bildung von Lücken (62) kreissegmentförmig am Umfang der Scheibe (15) angeordnet sind und von je einem Steg- und Haltelement (65) radial gehalten sind, an dem ein Steuerbolzen (44) senkrecht aufragend befestigt ist;
b) eine Primärsteuerscheibe (40), in der für jede Primärbacke (37) eine Steuerkulisse (41) zum Führen der Steuerbolzen (44) der Primärbacken (37) vorgesehen ist;
c) einen Sekundärbackenkörper (38) aus mindestens drei Sekundärbacken (39), die von je einem radial angeordneten Steg- und Haltelement (65) gehalten sind, an dem ein Steuerbolzen (45) senkrecht aufragend befestigt ist, wobei die Sekundärbacken (39) zueinander versetzt entlang des Umfangs so angeordnet sind, dass sie die Lücken (62) zwischen zwei Primärbacken (37) schließen können;
d) eine Sekundärsteuerscheibe (42), in der für jede Sekundärbacke (39) eine Steuerkulisse (43) zum Führen der Steuerbolzen (45) der Sekundärbacken (39) vorgesehen ist;
e) einem Trägerelement (66) mit radial angeordneten Aussparungen (67) zum Aufnehmen und Verschieben der Steg- und Halteelemente (65) der Primär- und Sekundärbacken (37;39) in radialer Richtung;
f) eine Steuerwelle (46), die fest mit der Primärsteuerscheibe (40) und der Sekundärsteuerscheibe (42) verbunden ist und
g) einen pneumatischen, hydraulischen oder elektrischen Schwenkantrieb (47), der die Steuerwelle (46) bewegt, um die Steuerbolzen (44, 45) in ihren Steuerkulissen (41, 42) zu führen und die Primärbacken (37) und Sekundärbacken (39) radial zu spannen oder zu entspannen.

13. Anlage nach Anspruch 11, **dadurch gekennzeichnet, dass** das Rührreibschweißwerkzeug (30) mit Sensor (35) in Bezug auf den Stumpfstoß (18) von Flansch (3) und Rohr (2) in y- und z-Richtung an einem Kreuzschlitten (29) durch Servomotore (31,32) und in y-Richtung an einer Spindel (34) durch einen Motor (33) verfahrbar angeordnet ist, wobei der das Rührreibschweißwerkzeug (30) tragende Kreuzschlitten (29) an einem Brückenträger (24) festgelegt ist, der in Richtung Längsachse (LA) des Rohres (x-Richtung) auf der zwischen den Einspanneinheiten (5,6) am Maschinenbett (4) verlegten Laufschienenpaar (7) durch einen Servomotor (19) verfahrbar ausgebildet, mit einer pneumatischen Bremse (21) versehen ist sowie eine pneumatische Einheit (63) zur Stabilisierung aufweist.

14. Anlage nach Anspruch 11,**dadurch gekennzeichnet, dass** die Flanschaufnahme (22) der verfahrbaren Einspanneinheit (6) durch mindestens einen pneumatischen Druckzylinder in Flucht der Längsachse (LA) des Rohres (2) axial beaufschlagbar ausgebildet ist, wobei der Druckzylinder über ein Proportionalventil zur Einstellung der Anpresskraft mit der Steuerung verbunden ist.

15. Anlage nach Anspruch 11, **dadurch gekennzeichnet, dass** die Steuerung (53) in eine an ein externes Strom- und Pressluftnetz (54,55) angeschlossene, in der ortsfesten Einspanneinheit (5) angeordnete Hauptsteuerung (53) und eine in der verfahrbaren Einspanneinheit (6) angeordnete Nebensteuerung (56) aufgeteilt sind, wobei die Hauptsteuerung (53) über eine, die Daten- und Steuerleitungen (57,58) und Pneumatikleitungen (61) aufnehmende flexible Verbindungsleitung (59) mit der Nebensteuerung (56) zum Versorgen der verfahrbaren Einspanneinheit (6) mit Strom und Pressluft sowie zur Übertragung von Steuerbefehlen und zum Datenaustausch in Verbindung steht.

16. Anlage nach Anspruch 15, **dadurch gekennzeichnet, dass** die Direktantriebe (9,22) für die Flanschaufnahme (8,22) der ortsfesten und verfahrbaren Einspanneinheit (5,6) durch eine separate Steuerleitung (57) mit der Hauptsteuerung (53) verbunden sind.

17. Anlage nach Anspruch 15, **dadurch gekenzeichnet**, dass die Servomotore (31, 32; 33 ; 52) für die Kreuzschlitten (29), Rührreibschweißwerkzeuge (30), die Vorrichtungen (50) zum An-und Abfahren der Formkeile (51) und der Servomotor (19) zum Verfahren der verschieblichen Einspanneinheit (6), die pneumatischen Schwenkantriebe (47) für die Spann- und Abstützscheiben (15), die pneumatischen Bremsen (21) und Einheiten (63) für die Rückenträger (24) der Kreuzschlitten (29), die pneumatische Bremse (27) der verfahrbaren Einspanneinheit (6) sowie die Druckzylinder zum axialen Spannen der Flansch-Rohr-Flansch-Anordnung über ihre jeweilige Ansteuerelektronik bzw. Proportionalventile (20, 26, 60, 64) durch eine weitere Steuerleitung (58) mit der Hauptsteuerung (50) verbunden sind.

18. Anlage nach Anspruch 11, **dadurch gekennzeichnet, dass** die Direktantriebe (9,23) Synchronmotore sind, die jeweils mit zwei Winkellagegebern zur Ermittlung der Winkellage der Rotation des Flansch-Rohr-Flansch-Elementes versehen sind, ist, die mit der Vorrichtung (50) zum An- und Abfahren des Formkeiles (51) mit der Hauptsteuerung (50) verbunden sind.

19. Anlage nach Anspruch 11, **dadurch gekennzeichnet, dass** jedem Rührreibschweißwerkzeug (30) ein Sensor (35), vorzugsweise ein Laser-Scanner, ein Bild-Sensor oder Linien-Laser, zugeordnet ist, dessen Auswerteelektronik mittels Graustufenanalyse die Lage der Stoßfuge (18) in Rotationsrichtung ermittelt und diese an die Hauptsteuerung (53) weiterleitet.

20. Anlage nach Anspruch 11, **dadurch gekennzeichnet, dass** der Formkeil (51) aus einem Material besteht, das werkstoffgleich oder -ähnlich mit dem des Flansches oder Rohres ist.
